# EUROPEAN PATENT APPLICATION

(11) **EP 2 947 940 A1**
(43) Date of publication of application: **25.11.2015**
(21) Application number: 14741045.0
(22) Date of filing: 15.01.2014
(51) Int. Cl.: H04W 72/04, H04W 76/00

(54) **TERMINAL DEVICE, BASE STATION DEVICE, COMMUNICATIONS SYSTEM, AND COMMUNICATIONS METHOD**

(30) Priority: 17.01.2013 JP 2013006320
(71) Applicant: KDDI Corporation, Tokyo 163-8003 (JP)
(72) Inventor: YAMAMOTO Toshiaki, Fujimino-shi Saitama 356-8502 (JP); OHSEKI Takeo, Fujimino-shi Saitama 356-8502 (JP); WANG Xiaoqiu, Fujimino-shi Saitama 356-8502 (JP); AKIMOTO Yosuke, Fujimino-shi Saitama 356-8502 (JP); KONISHI Satoshi, Fujimino-shi Saitama 356-8502 (JP)
(74) Representative: Tostmann, Holger Carl
(86) International application number: PCT/JP2014/050549
(87) International publication number: WO 2014/112514

(57) **Abstract**

A terminal device includes: a wireless communication unit that performs wireless communication; a connection control unit that connects to a first base station device so as to be able to wirelessly communicate with the first base station device via the wireless communication unit, the first base station device serving as a primary, the connection control unit connecting to a second base station device so as to be able to wirelessly communicate with the second base station device via the wireless communication unit, the second base station device serving as a secondary; and a first detection unit that determines whether a state of wireless communication between the terminal device and the first base station device is in a disconnected state based on a predetermined condition The connection control unit reconnects between the terminal device and the second base station device such that the second base station device newly serves as a primary base station device when the first detection unit determines that the state of wireless communication is in the disconnected state.

## Description

### TECHNICAL FIELD

The present invention relates to a terminal device, a base station device, a communications system, and a communications method.

Priority is claimed on Japanese Patent Application No. 2013-006320, filed January 17, 2013, the content of which is incorporated herein by reference.

### BACKGROUND ART

In LTE-Advanced systems, which are being investigated for 3GPP, carrier aggregation (CA) techniques that simultaneously use a plurality of frequency bands (component carrier (CC)) are employed with an object of improving the frequency utilization efficiency and the peak throughput (refer to Non-Patent Document 1).

In inter-site carrier aggregation (Inter-Site CA), which represents a form of carrier aggregation, a mobile terminal device (UE: User Equipment) simultaneously connects to a plurality of base station devices (eNB: E-UTRAN NodeB) that are installed at different locations. Further, the mobile terminal device communicates with the base station devices using a different frequency band (CC) for each base station device.

A network configuration is proposed in which, for the communication between base station devices and a mobile terminal device, the C-Plane and the U-Plane are separated and each is transmitted via different base station devices (refer to Non-Patent Document 2).

A macro base station device of a macro cell refers to a base station device that is deployed over a wide area, mainly for securing coverage for mobile terminal devices. As an example, a carrier frequency band such as an 800 MHz band is utilized. A small cell base station device of a small cell refers to a base station device with a narrow coverage that is installed on a spot-by-spot basis for expanding the capacity. As an example, a high-frequency band such as a 3.4 GHz band is utilized.

In carrier aggregation, a base station device that manages the RRC (Radio Resource Control) connections between mobile terminal devices and base station devices is referred to as a PCell (Primary Cell). A base station device that is not a PCell is referred to as an SCell (Secondary Cell). The C-Plane represents a protocol for performing connection management and mobility control of mobile terminal devices. The U-Plane represents a protocol that relates to the transmission and reception of user traffic and scheduling information.

A downlink (DL) represents communication in the direction from a base station device to a mobile terminal device. An uplink (UL) represents communication in the direction from a mobile terminal device to a base station device.

### [Prior Art Documents]

### [Non-Patent Documents]

[Non-Patent Document 1] 3GPP TS36.300 v11.3.0, "E-UTRA and E-UTRAN overall description", 2012-09.
[Non-Patent Document 2] NTT DOCOMO INC., "Requirements, Candidate Solutions & Technology Roadmap for LTE Rel-12 Onward", 3GPP Workshop on Release 12 and onwards, RWS-120010, June 11-12, 2012.
[Non-Patent Document 3] 3GPP TS36.331 v11.1.0, "E-UTRA RRC Protocol specification", 2012-09.

### SUMMARY OF THE INVENTION

### Problem to be Solved by the Invention

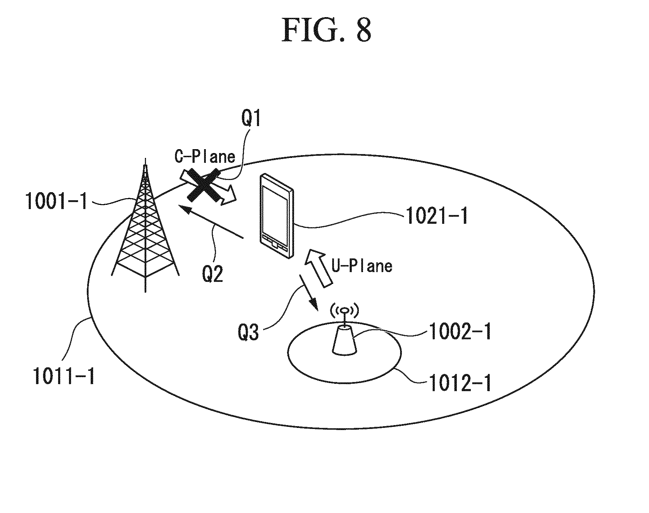

FIG. 8 is a diagram for describing an example of processing that, when the communication quality of a PCell deteriorates and a communication connection is disconnected, reconnects the communication.

The communications system shown in FIG. 8 includes a macro base station device 1001-1, a small cell base station device 1002-1, and a mobile terminal device 1021-1. FIG. 8 shows a cell (communication region) 1011-1 of the macro base station device 1001-1, and a cell (communication region) 1012-1 of the small cell base station device 1002-1. In the example of FIG. 8, the cell 1012-1 of the small cell base station device 1002-1 is contained within the cell 1011-1 of the macro base station device 1001-1.

The following represent preconditions in the description. That is to say, with regards to the mobile terminal device 1021-1, the macro base station device 1001-1 represents the PCell. The macro base station device 1001-1 performs communication of C-Plane data (signals) with the mobile terminal device 1021-1. With regards to the mobile terminal device 1021-1, the small cell base station device 1002-1 represents the SCell. The macro base station device 1001-1 performs communication of U-Plane data (signals) with the mobile terminal device 1021-1. In the communications system, the following processing (B1) to (B3) is performed.

(B1): The communication quality between the mobile terminal device 1021-1 and the PCell deteriorates, and a disconnection of the communication connection between the mobile terminal device 1021-1 and the PCell occurs (refer to reference symbol Q1 in FIG. 8). As a result, irrespective of the communication quality between the mobile terminal device 1021-1 and the SCell, the connection between the mobile terminal device 1021-1 and the base station network becomes disconnected.

(B2): The mobile terminal device 1021-1 performs reconnection with the PCell (refer to reference symbol Q2 in FIG. 8). The mobile terminal device 1021-1 resets (disconnects) the connection with the SCell during reconnection processing with the PCell.

(B3): Consequently, in order to perform communication with the SCell, the mobile terminal device 1021-1 once again performs reconnection processing with the SCell (refer to reference symbol Q3 in FIG. 8).

In the manner of the processing of (B1) described above, when the quality of communication between the mobile terminal device 21-1 and the PCell deteriorates and the communication connection between the mobile terminal device 21-1 and the PCell is disconnected, the connection between the mobile terminal device 21-1 and the base station network is disconnected irrespective of the quality of communication between the mobile terminal device 21-1 and the SCell. Consequently, in the manner of the processing of (B2) described above, the mobile terminal device 21-1 cannot communicate with the base station network until the mobile terminal device 21-1 newly reconnects a base station device as the PCell.

For example, with respect to the reconnection in the processing of (B2) described above, a synchronization process of an uplink by means of a Contention based random access procedure (refer to 10.1.5.1 Contention based random access procedure of Non-Patent Document 1), and an RRC connection re-establishment process (refer to 5.3.7 RRC connection re-establishment of Non-Patent Document 3) are required. Consequently, there is a problem in that a long time is required for reconnection.

Furthermore, in the processing of (B2) described above, the mobile terminal device 21-1 carries out reconnection with the PCell. Consequently, there is a need for the mobile terminal device 21-1 to reset (disconnect) the connection with the SCell during reconnection processing with the PCell. As a result, the mobile terminal device 21-1 must once again carry out reconnection processing with the SCell in the processing of (B3) described above in order to perform communication with the SCell. Consequently, there is a problem in that even more time is needed for reconnection with the SCell.

The present invention takes into consideration the above circumstances. An object of the present invention is to provide a terminal device, a base station device, a communications system, and a communications method that is able to shorten the duration of communication disconnections between the terminal device and a base station network.

### Means for Solving the Problem

(1): In order to solve the above problem, a terminal device according to an aspect of the present invention includes: a wireless communication unit that performs wireless communication; a connection control unit that connects to a first base station device so as to be able to wirelessly communicate with the first base station device via the wireless communication unit, the first base station device serving as a primary, the connection control unit connecting to a second base station device so as to be able to wirelessly communicate with the second base station device via the wireless communication unit, the second base station device serving as a secondary; and a first detection unit that determines whether a state of wireless communication between the terminal device and the first base station device is in a disconnected state based on a predetermined condition. The connection control unit reconnects between the terminal device and the second base station device such that the second base station device newly serves as a primary base station device when the first detection unit determines that the state of wireless communication is in the disconnected state.
(2): The terminal device according to abovementioned (1) may further include a second detection unit that determines whether a state of wireless communication between the terminal device and the second base station device is in a disconnected state based on a predetermined condition. The connection control unit may not execute reconnection processing with the first base station device when the first detection unit detects that the state of wireless communication between the terminal device and the first base station device is in the disconnected state and the second detection unit detects that the state of wireless communication between the terminal device and the second base station device is not in the disconnected state.
(3): In the terminal device according to abovementioned (2), the terminal device may connects to a plurality of base station devices including the second base station device, the plurality of base station devices serving as secondary base station devices. The connection control unit may not execute reconnection processing with the first base station device when the first detection unit determines that the state of wireless communication between the terminal device and the first base station device is in the disconnected state and the second detection unit determines that the state of wireless communication between the terminal device and at least one among the plurality of second base station devices is not in the disconnected state.
(4): In the terminal device according to any one of abovementioned (1) to (3), the connection control unit may reconnect between the terminal device and the second base station device without performing random access.
(5): In order to solve the above problem, a terminal device according to an aspect of the present invention includes: a wireless communication unit that performs wireless communication; a connection control unit that connects to a first base station device so as to be able to wirelessly communicate with the first base station device via the wireless communication unit, the first base station device serving as a primary, the connection control unit connecting to a second base station device so as to be able to wirelessly communicate via the wireless communication unit, the second base station device serving as a secondary; a first detection unit that determines whether a state of wireless communication between the terminal device and the first base station device is in a disconnected state based on a predetermined condition; and a second detection unit that determines whether a state of wireless communication between the terminal device and the second base station device is in a disconnected state based on a predetermined condition.
(6): In order to solve the above problem, a base station device according to an aspect of the present invention includes: a wireless communication unit that wirelessly communicates with a terminal device, the wireless communication unit receiving a signal from the terminal device in a state where the base station device is serving as a secondary base station device and a connection state of wireless communication between the terminal device and another primary base station device being serving as a primary is in a disconnected state, the signal requesting the base station device to newly serves as a primary base station device; and a data control unit that receives data from the other base station device and transmits the data via the wireless communication unit to the terminal device when the wireless communication unit receives the signal, the data being untransmitted to the terminal device by the other base station device.
(7): In order to solve the above problem, a communications system according to an aspect of the present invention includes: a terminal device; and first and second base station devices. The terminal device connects to the first base station device so as to be able to wirelessly communicate with the first base station device, the first base station device serving as a primary, terminal device connecting to the second base station device so as to be able to wirelessly communicate with the second base station device, the second base station device serving as a secondary. The terminal device determines whether a state of wireless communication between the terminal device and the base station device is in a disconnected state based on a predetermined condition. The terminal device reconnects between the terminal device and the second base station device such that the second base station device newly serves as a primary base station device when the terminal device determines that the state of wireless communication is in the disconnected state.
(8): In order to solve the above problem, a communications method according to an aspect of the present invention includes: connecting a terminal device and a first base station device such that the terminal device and the first base station device are able to wirelessly communicate with each other, the first base station device serving as a primary, and connecting the terminal device and a second base station device such that the terminal device and the second base station device are able to wirelessly communicate with each other, the second base station device serving as a secondary; determining whether a state of wireless communication between the terminal device and the first base station device is in a disconnected state based on a predetermined condition; and reconnecting between the terminal device and the second base station device such that the second base station device newly serves as a primary base station device when it is determined that the state of wireless communication is in the disconnected state.

### Effect of the Invention

According to the present invention, the duration of a disconnection in a communication connection between a terminal device and a base station network can be made shorter.

### BRIEF DESCRIPTION OF THE DRAWINGS

FIG. 1 is a block diagram showing a schematic configuration of a communications system according to an embodiment of the present invention.
FIG. 2 is a block diagram showing a schematic configuration of a mobile terminal device according to the embodiment of the present invention.
FIG. 3 is a block diagram showing a schematic configuration of a macro base station device according to the embodiment of the present invention.
FIG. 4 is a block diagram showing a schematic configuration of a small cell base station device according to the embodiment of the present invention.
FIG. 5 is a diagram for describing an example of processing (a PCell reconnection process with respect to an SCell) that is performed in the communications system according to the embodiment of the present invention.
FIG. 6 is a sequence diagram showing an example of connection processing (RRC connection establishment processing).
FIG. 7 is a sequence diagram showing an example of a random access procedure and an RRC connection establishment process.
FIG. 8 is a diagram for describing an example of communication disconnection and reconnection processing that accompanies a deterioration in communication quality of a PCell.

### EMBODIMENTS FOR CARRYING OUT THE INVENTION

Hereunder, an embodiment of the present invention is described with reference to the drawings.

### <Configuration of Communications System According to Present Embodiment>

The communications system according to the present embodiment is such that C-Plane data is transmitted and received via a PCell. Furthermore, U-Plane data is transmitted and received via either a PCell or an SCell, or both. The communications system according to the present embodiment is such that the macro base station device and the small cell base station device are respectively able to connect as a PCell, and are also able to connect as an SCell.

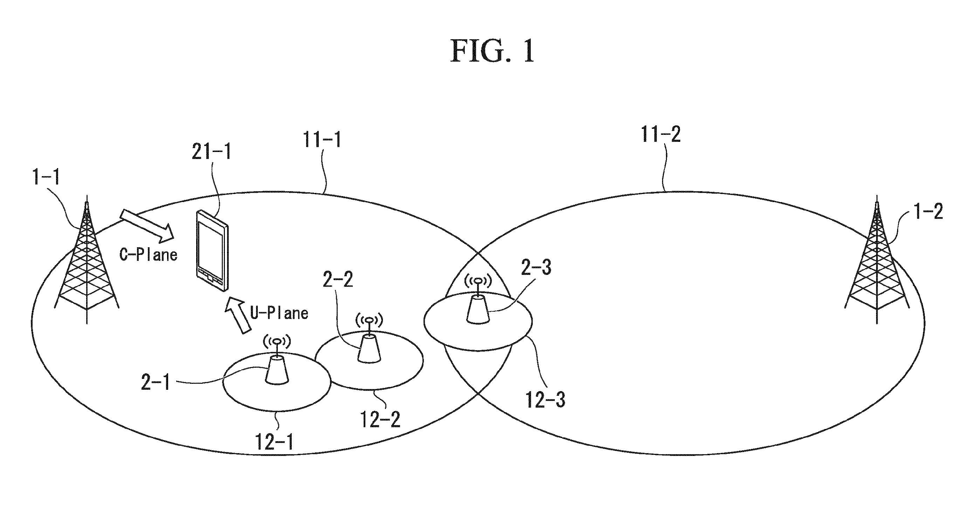

FIG. 1 is a block diagram showing a schematic configuration of a communications system according to the embodiment of the present invention.

A communications system according the present embodiment includes a plurality (two are shown in the example of FIG. 1) of macro base station devices 1-1 to 1-2, a plurality (three are shown in the example of FIG. 1) of small cell base station devices 2-1 to 2-3, and a plurality (just one is shown in the example of FIG. 1) of mobile terminal devices (an example of a terminal device) 21-1. FIG. 1 shows cells (communication regions) 11-1 to 11-2 of the macro base station devices 1-1 to 1-2, and cells (communication regions) 12-1 to 12-3 of the small cell base station devices 2-1 to 2-3.

In the example of FIG. 1, the cells 12-1 to 12-2 of the small cell base station devices 2-1 to 2-2 are contained in the cell 11-1 of the macro base station device 1-1. The cells 11-1 to 11-2 of the two macro base station devices 1-1 to 1-2 and the cell 12-3 of the single small cell base station device 2-3 have mutually overlapping regions (areas).

The following represent preconditions in the description. That is to say, with regards to the mobile terminal device 21-1, the macro base station device 1-1 represents the PCell. The macro base station device 1-1 performs communication of C-Plane data (signals) with the mobile terminal device 21-1. With regards to the mobile terminal device 21-1, the small cell base station device 2-1 represents the SCell. The small cell base station device 2-1 performs communication of U-Plane data (signals) with the mobile terminal device 21-1.

In the present embodiment, the macro base station devices 1-1 to 1-2 and the small cell base station devices 2-1 to 2-3 are connected such that they are able to mutually directly or indirectly communicate. The communication may use a wired communication, or it may use a wireless communication for example.

The communications system according to the present embodiment is such that the mobile terminal device 21-1 is able to simultaneously communicate with the macro base station devices 1-1 to 1-2 and the small cell base station devices 2-1 to 2-3 using a C/U (C-Plane/U-Plane) separation.

In the communications system, the number of macro base station devices, the number of small cell base station devices, and the number of mobile terminal devices may respectively be varied.

### <Configuration of Mobile Terminal Device According to Present Embodiment>

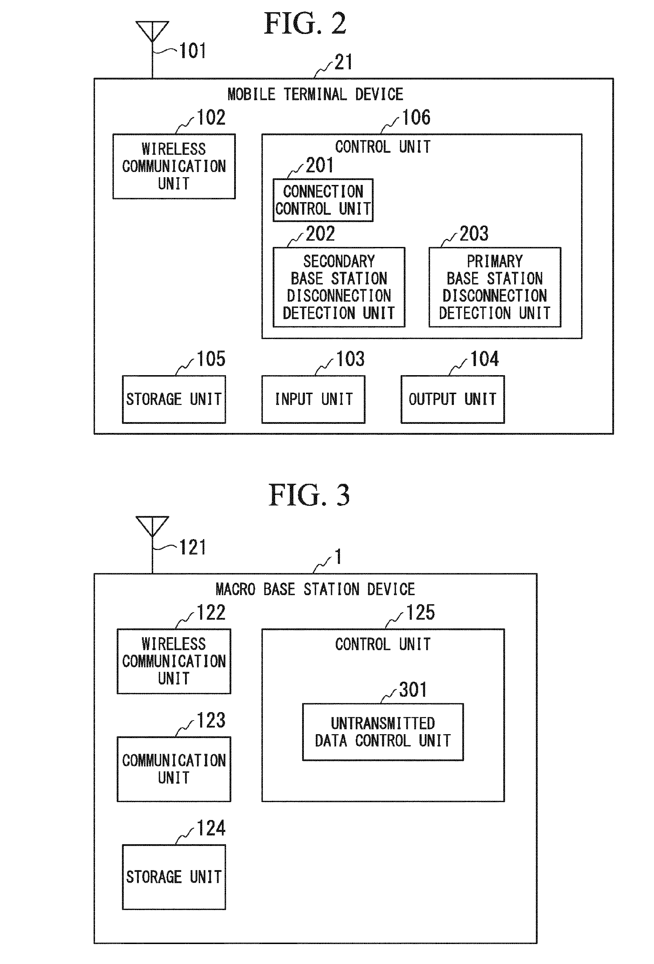

FIG. 2 is a block diagram showing a schematic configuration of a mobile terminal device according to the embodiment of the present invention. In the present embodiment, each mobile terminal device has the same configuration and performs the same operations. Therefore, they are collectively described as a mobile terminal device 21.

The mobile terminal device 21 according to the present embodiment includes an antenna 101, a wireless communication unit 102, an input unit 103, an output unit 104, a storage unit 105, and a control unit 106.

The control unit 106 includes a connection control unit 201, a secondary base station disconnection detection unit (in the following, sometimes referred to simply as a second detection unit) 202, and a primary base station disconnection detection unit (in the following, sometimes referred to simply as a first detection unit) 203.

The antenna 101 communicates (transmits and receives) wireless signals.

The wireless communication unit 102 processes signals that are subject to transmission, and wirelessly transmits them from the antenna 101. The wireless communication unit 102 processes wireless signals that are received by the antenna 101. The wireless communication unit 102 wirelessly communicates with base station devices (the macro base station devices 1-1 to 1-2 and the small cell base station devices 2-1 to 2-3 in the present embodiment) for example.

The input unit 103 accepts external inputs. The input unit 103 includes an operation unit that accepts operations performed by a user (person) for example. The operation unit is configured by a touch panel or keys for example. The input unit 103 includes an audio input unit that accepts the input of external sound (such as audio) for example. The input unit 103 includes for example, a data input unit that accepts data input from an external memory or device, and the like.

The output unit 104 performs output to the exterior. The output unit 104 includes for example, a display unit that displays information on a display. The display unit is configured by, for example, a liquid crystal display or the like. The output unit 104 includes for example, an audio output unit that outputs sound (such as audio) to the exterior. The output unit 104 includes for example, a data output unit that outputs data to an external memory or device, and the like.

The storage unit 105 stores a variety of information. The storage unit 105 is configured by a memory for example. The storage unit 105 stores a program that, for example, is processed by a processor such as the control unit 106, and the like.

The control unit 106 performs various processes and controls.

The connection control unit 201 connects via the wireless communication unit 102 such that it is able to wirelessly communicate with a primary base station device (the PCell in the present embodiment). Furthermore, the connection control unit 201 connects such that it is able to wirelessly communicate with a secondary base station device (the SCell in the present embodiment).

The second detection unit 202 determines, based on a predetermined condition, whether or not the wireless communication state between the mobile terminal device 21 and the secondary base station device is in a disconnected state, and detects that the wireless communication state is in a disconnected state (in the present embodiment, an RLF (Radio Link Failure) state).

The first detection unit 203 determines, based on a predetermined condition, whether or not the wireless communication state between the mobile terminal device 21 and the primary base station device is in a disconnected state, and detects that the wireless communication state is in a disconnected state (in the present embodiment, an RLF state).

When it is detected by the first detection unit 203 that the communication connection is in a disconnected state, and it is not detected by the second detection unit 202 that the communication connection is in a disconnected state, the connection control unit 201 then makes reconnection processing with the primary base station device non-executed.

A case where a plurality of secondary base station devices exist is described. In this case, when it is detected by the first detection unit 203 that the communication connection is in a disconnected state, and it is not detected by the second detection unit 202 that the communication connection between the mobile terminal device 21 and at least one among the plurality of secondary base station devices is in a disconnected state, the connection control unit 201 then makes reconnection processing between the mobile terminal device 21 and the primary base station device non-executed.

When it is detected by the first detection unit 203 that the communication connection is in a disconnected state, the connection control unit 201 executes reconnection processing between the mobile terminal device 21 and the base station device thereof, such that the secondary base station device newly serves as the primary base station device.

At the time the connection control unit 201 executes the connection processing described above for newly making the secondary base station device the primary base station device, it makes random access processing non-executed.

### <Configuration of Macro Base Station Device According to Present Embodiment>

FIG. 3 is a block diagram showing a schematic configuration of a macro base station device according to the embodiment of the present invention. In the present embodiment, each macro base station device has the same configuration and performs the same operations. Therefore, they are collectively described as a macro base station device 1.

The macro base station device 1 according to the present embodiment includes an antenna 121, a wireless communication unit 122, a communication unit 123, a storage unit 124, and a control unit 125.

The control unit 125 includes an untransmitted data control unit (in the following, sometimes referred to simply as a data control unit) 301.

The antenna 121 communicates (transmits and receives) wireless signals.

The wireless communication unit 122 processes signals that are subject to transmission, and wirelessly transmits them from the antenna 121. The wireless communication unit 122 processes wireless signals that are received by the antenna 121. The wireless communication unit 122 wirelessly communicates with the mobile terminal device 21-1 for example.

The communication unit 123 communicates (transmits and receives) information with other base station devices (the macro base station devices and the small cell base station devices). This communication may be performed using a wired circuit, or it may be performed via a wireless circuit for example.

The storage unit 124 stores a variety of information. The storage unit 124 is configured by a memory for example. The storage unit 124 stores a program that, for example, is processed by a processor such as the control unit 125, and the like. The storage unit 124 stores, for example, information relating to the mobile terminal devices 21-1 that is connected to the macro base station device 1 such that wireless communication is possible (information for managing the mobile terminal device 21-1 for example).

The control unit 125 performs various processes and controls.

When the data control unit 301 is connected such that wireless communication is possible with the mobile terminal device 21-1 as the secondary base station device by means of the wireless communication unit 122, if it is detected by the mobile terminal device 21-1, based on a predetermined condition, that the communication connection of the wireless communication with the primary base station device is in a disconnected state, and reconnection processing with the mobile terminal device 21-1 is executed such that its own device newly becomes the primary base station device, it receives data from the original primary base station device that is untransmitted with respect to the mobile terminal device 21-1, and it transmits the received data to the mobile terminal device 21-1 by means of the wireless communication unit 122.

The wireless communication unit 122 may, in a state where the macro base station device 1 is serving as the secondary base station device and the wireless communication connection state between the mobile terminal device 21-1 and the primary small cell base station device 2-1 is in a disconnected state, receive a signal from the mobile terminal device 21-1 that requests that the macro base station device 1 newly serves as the primary base station device. If the data control unit 201 receives the signal thereof by means of the wireless communication unit 122, it may receive from the small cell base station device 2-1, data that is untransmitted by the small cell base station device 2-1 with respect to the mobile terminal device 21-1, and transmit the data thereof to the mobile terminal device 21-1 via the wireless communication unit 122.

### <Configuration of Small Cell Base Station Device According to Present Embodiment>

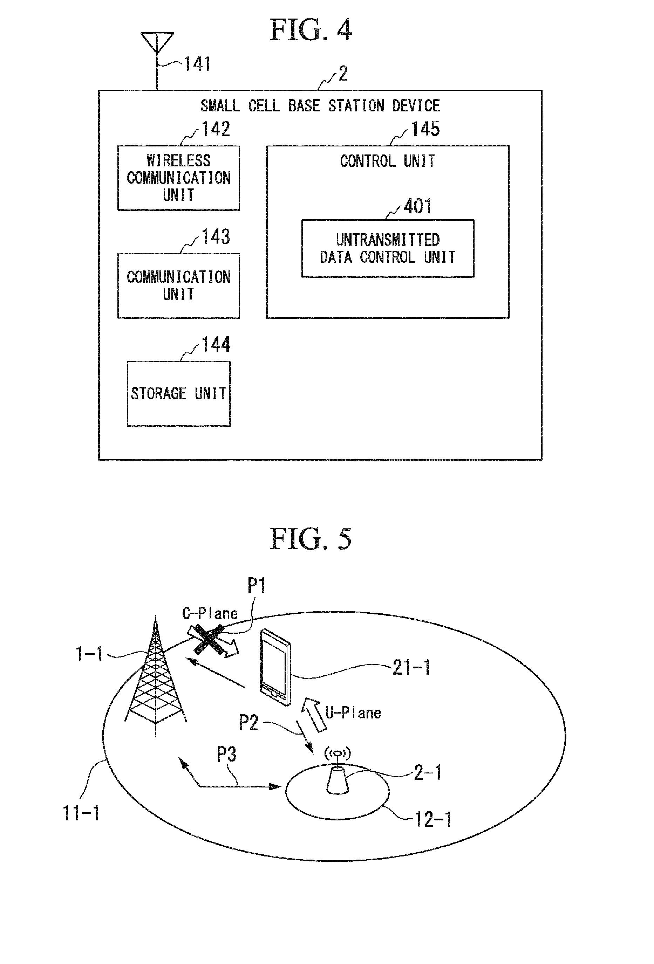

FIG. 4 is a block diagram showing a schematic configuration of a small cell base station device according to the embodiment of the present invention. In the present embodiment, each small cell base station device has the same configuration and performs the same operations. Therefore, they are collectively described as a small cell base station device 2.

The small cell base station device 2 according to the present invention includes an antenna 141, a wireless communication unit 142, a communication unit 143, a storage unit 144, and a control unit 145.

The control unit 145 includes an untransmitted data control unit (in the following, sometimes referred to simply as a data control unit) 401.

The antenna 141 communicates (transmits and receives) wireless signals.

The wireless communication unit 142 processes signals that are subject to transmission, and wirelessly transmits them from the antenna 141, and processes wireless signals that are received by the antenna 141. The wireless communication unit 142 wirelessly communicates with the mobile terminal device 21-1 for example.

The communication unit 143 communicates (transmits and receives) information with the other base station devices (the macro base station devices and the small cell base station devices). This communication may be performed using a wired circuit, or it may be performed via a wireless circuit for example.

The storage unit 144 stores a variety of information. The storage unit 144 is configured by a memory for example. The storage unit 144 stores a program that, for example, is processed by a processor such as the control unit 145, and the like. The storage unit 144 stores, for example, information relating to the mobile terminal device 21-1 that is connected such that wireless communication is possible (information for managing the small cell base station device 2 for example).

The control unit 145 performs various processes and controls.

When the data control unit 401 is connected such that wireless communication is possible with the mobile terminal device 21-1 as the secondary base station device by means of the wireless communication unit 142, then if it is detected by the mobile terminal device 21-1, based on a predetermined condition, that the communication connection of the wireless communication with the primary base station device is in a disconnected state, and reconnection processing with the mobile terminal device 21-1 is executed such that its own device newly becomes the primary base station device, it receives data from the original primary base station device that is untransmitted with respect to the mobile terminal device 21-1, and it transmits the received data to the mobile terminal device 21-1 by means of the wireless communication unit 142.

The wireless communication unit 142 may, in a state where the small cell base station device 2 is serving as the secondary base station device and the wireless communication connection state between the mobile terminal device 21-1 and the primary macro base station device 1 is in a disconnected state, receive a signal from the mobile terminal device 21-1 that requests that the small cell base station device 2 newly serves as the primary base station device. If the data control unit 401 receives the signal thereof by means of the wireless communication unit 142, it may receive from the macro base station device 1, data that is untransmitted by the macro base station device 1 with respect to the mobile terminal device 21-1, and transmit the data thereof to the mobile terminal device 21-1 via the wireless communication unit.

### <Processing Performed in Communications System According to Present Embodiment>

FIG. 5 is a diagram for describing an example of processing (a process for reconnecting the SCell as the PCell) that is performed in a communications system according to the embodiment of the present invention.

FIG. 5 shows, as a configuration for describing the present processing, a macro base station device 1-1, a small cell base station device 2-1, a mobile terminal device 21-1, a cell 11-1 of the macro base station device 1-1, and a cell 12-1 of the small cell base station device 2-1.

The following represent preconditions in the description. That is to say, with regards to the mobile terminal device 21-1, the macro base station device 1-1 represents the PCell. The macro base station device 1-1 performs communication of C-Plane data (signals) with the mobile terminal device 21-1. With regards to the mobile terminal device 21-1, the small cell base station device 2-1 represents the SCell. The small cell base station device 2-1 performs communication of U-Plane data (signals) with the mobile terminal device 21-1.

In the communications system according to the present embodiment, schematically, when the connection between the mobile terminal device 21-1 and the PCell is disconnected, the mobile terminal device 21-1 transmits to the SCell, to which a connection has been previously established, a reconnection request to the base station network. Further, the mobile terminal device 21-1 reconnects to the SCell as the PCell. As a result, the time required for reconnection between the mobile terminal device 21-1 and the base station network is shortened. At this time, the SCell, which has received the reconnection request, may perform information exchange with the PCell via a line, and may carry out transfer of untransmitted data, and the like.

The lines that connect between base station devices (here, between the SCell and the PCell) may use a so called X2 line or S1 line for example.

As a specific example, the communications system according to the present embodiment performs the following processing (A1) to (A3).

(A1): The first detection unit 203 detects (senses) that the communication connection between the mobile terminal device 21-1 and the PCell (at this stage, the macro base station device 1-1) is disconnected (RLF).

The method of detecting an RLF between the mobile terminal device 21-1 and the PCell is not particularly limited. The detection method may use the RLF determination method disclosed in "5.3.11.3 Detection of radio link failure" in Non-Patent Document 3 for example. Furthermore, it may be interpreted that, without introducing an RLF itself, an RLF has occurred if channel quality information (CQI: Channel Quality Indication) is a fixed value or less.

The second detection unit 202 monitors the communication connection state between the mobile terminal device 21-1 and the SCell (at this stage, the small cell base station device 2-1), and detects that a disconnection (RLF) of the communication connection with the SCell has occurred.

The method of detecting an RLF between the mobile terminal device 21-1 and the SCell is not particularly limited. The detection method is such that the RLF determination method disclosed in "5.3.11.3 Detection of radio link failure" in Non-Patent Document 3 may be applied to the SCell for example.

More specifically, when the mobile terminal device 21-1 determines that one or more of the following three conditions are satisfied, it determines that an RLF has occurred between the mobile terminal device 21-1 and the SCell (refer to Non-Patent Document 3 for details).

### <First condition for determining RLF has occurred>

The mobile terminal device 21-1 monitors the "in-sync" and the "out-of-sync" with respect to the received power of the wireless communications with the SCell. If a T310 timer expires, it determines that the condition (first condition) has been satisfied.

### <Second condition for determining RLF has occurred>

The mobile terminal device 21-1 measures T300, T301, T304, and T311 timers with respect to the SCell. If a random access procedure in the MAC (Medium Access Control) fails while one of the timers is active, it determines that the condition (second condition) has been satisfied.

### <Third condition for determining RLF has occurred>

If a maximum retransmission frequency for an RLC (Radio Link Control) is reached with respect to the SCell, the mobile terminal device 21-1 determines that the condition (third condition) has been satisfied.

In the present embodiment, if an RLF has not occurred between the mobile terminal device 21-1 and the SCell, the connection control unit 201 may not execute reconnection processing (RRC connection re-establishment) with the PCell (refer to "5.3.3 RRC connection establishment" in Patent Document 3).

A case where the mobile terminal device 21-1 has simultaneously connected to a plurality of SCells is described. In this case, the mobile terminal device 21-1 monitors the respective communication connection states between the mobile terminal device 21-1 and the plurality of SCells. The connection control unit 201 may not execute reconnection processing between the mobile terminal device 21-1 and the PCell unless an RLF has simultaneously occurred between the mobile terminal device 21-1 and all of the SCells (that is to say, if an RLF has not occurred between the mobile terminal device 21-1 and at least one of the SCells).

(A2): The connection control unit 201 of the mobile terminal device 21-1 transmits a reconnection request with respect to the SCell. If the mobile terminal device 21-1 is connected to a plurality of SCells, the connection control unit 201 may transmit the reconnection request with respect to a single arbitrary SCell, or a single SCell selected by a predetermined method for example. The connection control unit 201 may transmit the reconnection request with respect to the SCell only in a case where an RLF has not occurred between the mobile terminal device 21-1 and the SCell for example.

Specifically, the mobile terminal device 21-1 carries out, as reconnection processing, connection processing (RRC connection establishment processing) with the SCell. The mobile terminal device 21-1 reconnects to the SCell thereof as the PCell, as a result of this connection processing.

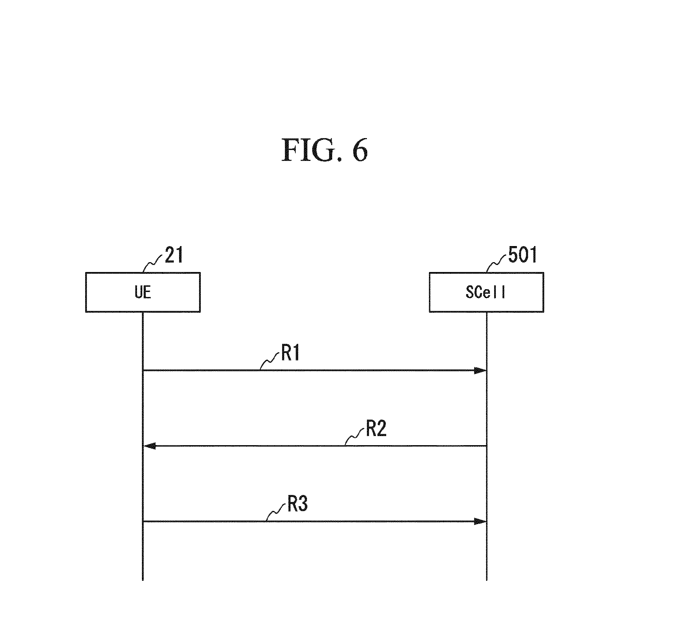

FIG. 6 is a sequence diagram showing an example of such connection processing (RRC connection establishment processing).

FIG. 6 shows connection processing (step R1) to (step R3) between a mobile terminal device (UE) 21 and an SCell 501.

(Step R1): The mobile terminal device 21 wirelessly transmits an RRC connection request signal with respect to the SCell 501.

(Step R2): The SCell 501 receives the RRC connection request signal, and wirelessly transmits an RRC connection setup signal with respect to the mobile terminal device 21.

(Step R3): The mobile terminal device 21 receives the RRC connection setup signal, and wirelessly transmits to the SCell 501, an RRC connection setup complete signal.

At the time of such connection processing, the mobile terminal device 21-1 and the SCell have previously established synchronization of an uplink. Consequently, it is not necessary for the connection control unit 201 to carry out a random access procedure, and the procedure can be omitted.

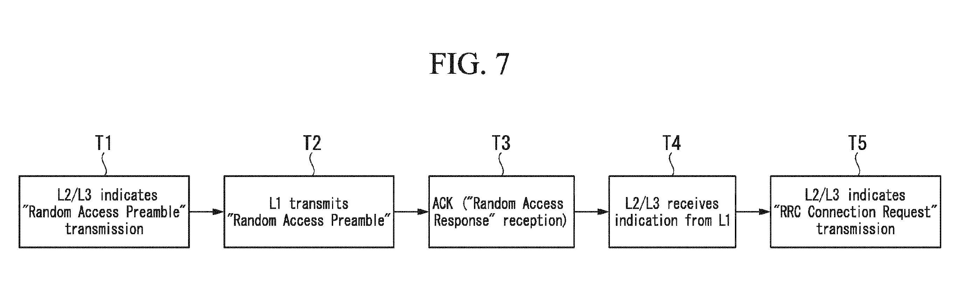

Specifically, of the five blocks of processing (process T1 to process T5) shown in FIG. 7, the first four blocks of processing (process T1 to process T4) can be omitted.

FIG. 7 is a sequence diagram showing an example of a random access procedure and an RRC connection establishment process. This processing corresponds to the processing of "Figure 10.1.5.3-1: Interaction model between L1 and L2/3 for Random Access Procedure" (refer to Non-Patent Document 1 for details).

(Process T1): Layer 2 (L2)/layer 3 (L3) requests transmission of a random access preamble.

(Process T2): Layer 1 (L1) transmits the random access preamble.

(Process T3): Layer 1 confirms normal reception (ACK) of the random access preamble.

(Process T4): Layer 2/layer 3 receives from layer 1 a notification regarding the normal reception of the random access preamble.

(Process T5): Layer 2/layer 3 requests transmission of an RRC connection request.

(A3): In the processing of (A2) above, the RRC connection request signal (message) transmitted from the mobile terminal device 21-1 with respect to the SCell (the small cell base station device 2-1 in this example) contains information regarding the base station number (PCI: Physical Cell Identifier) of the PCell (the macro base station device 1-1 in this example) prior to the occurrence of disconnection of the communication connection.

The SCell receives this RRC connection request signal. In response to receiving this signal, the data control unit of the SCell (here, the data control unit 401 of the small cell base station device 2) performs, via a line (such as an X2 line for example), a buffer transfer (a transfer received from the previous PCell) of the untransmitted data present in the previous PCell (the macro base station device 1-1 in this example). Further, the data control unit wirelessly transmits and provides the received untransmitted data to the mobile terminal device 21-1.

### <Summary of configuration and effect of present embodiment>

As described above, in the communications system according to the present embodiment, it is possible for the mobile terminal device 21-1 to simultaneously connect and wirelessly communicate with a plurality of base station devices 1-1 and 2-1. In this configuration, when the connection with the base station device (the PCell in the present embodiment) that manages the connection with the base station network is disconnected, the mobile terminal device 21-1 reconnects to the base station network via another base station device (the SCell in the present embodiment) to which a connection has previously been established. As a result, the time required for reconnection is shortened, and the influence on the communication performance of the mobile terminal device 21-1 can be reduced (minimized for example).

In the communications system according to the present embodiment, the mobile terminal device 21-1 monitors the quality of communication with the SCell (the received power for example), and executes determination of a disconnection (RLF) of the communication connection.

In the communications system according to the present embodiment, when the mobile terminal device 21-1 detects an RLF with the PCell, if an RLF has not occurred in the communication between the mobile terminal device 21-1 and the SCell, it does not perform reconnection processing (RRC connection re-establishment) between the mobile terminal device 21-1 and the PCell.

In this case, if a plurality of SCells that are connected to the mobile terminal device 21-1 exist, reconnection processing (RRC connection re-establishment) between the mobile terminal device 21-1 and the PCell is not performed unless it is in a state where an RLF has occurred in the communication with all SCells.

In the communications system according to the present embodiment, the mobile terminal device 21-1, which has detected an RLF with the PCell, starts connection processing (RRC connection establishment) for reconnection to the SCell, and reconnects to the SCell thereof as the PCell.

In the communications system according to the present embodiment, in such reconnection processing, the SCell is reconnected as the PCell without performing a random access procedure with the SCell.

In the communications system according to the present embodiment, the RRC connection request signal (message) transmitted from the mobile terminal device 21-1 to the SCell contains the base station number (PCI) of the PCell prior to the occurrence of disconnection of the communication connection. The SCell receives the RRC connection request signal (message). In response to the signal thereof, the SCell performs, via a backbone line (an X2 line or an S1 line for example), a buffer transfer of the untransmitted data present in the PCell prior to the occurrence of disconnection of the communication connection, and wirelessly transmits and provides the received untransmitted data to the mobile terminal device 21-1.

As described above, in the communications system according to the present embodiment, the mobile terminal device 21-1, as reconnection processing to the base station device, following disconnection of the communication connection with the PCell, reconnects to the SCell, to which a wireless uplink and downlink have been previously established, as the PCell. As a result, the time required for reconnection to the base station network can be shortened, and the influence on the communication performance of the mobile terminal device 21-1 can be reduced. Consequently, the time in which the communication connection between the mobile terminal device 21-1 and the base station network is disconnected can be shortened.

### [Configuration example according to foregoing embodiment]

As a configuration example, a terminal device (in the foregoing embodiment, the mobile terminal device 21-1) includes: a wireless communication unit (in the foregoing embodiment, the wireless communication unit 102) that wirelessly communicates with a base station device (in the foregoing embodiment, the macro base station devices 1-1 to 1-2 and the small cell base station devices 2-1 to 2-3); a connection control unit (in the foregoing embodiment, the connection control unit 201) that, by means of the wireless communication unit, connects to a primary base station device (in the foregoing embodiment, the PCell) such that they are able to wirelessly communicate, and connects to a secondary base station device (in the foregoing embodiment, the SCell) such that they are able to wirelessly communicate; and a first detection unit (in the foregoing embodiment, the first detection unit 203) that, based on a predetermined condition, detects that the communication connection of the wireless communication with the primary base station device is in a disconnected state. When the communication disconnection (in the foregoing embodiment, an RLF) state is detected by the first detection unit, the connection control unit executes reconnection processing with the base station devices such that the secondary base station device is newly serves as the primary base station device.

As a configuration example, the terminal device further includes a second detection unit (in the foregoing embodiment, the second detection unit 202) that, based on a predetermined condition, detects a communication disconnection (in the foregoing embodiment, an RLF) state of the wireless communication with the secondary base station device. When the communication disconnection state is detected by the first detection unit and the communication disconnection state is non-detected (that is to say, it is not detected) by the second detection unit, the connection control unit then makes reconnection processing with the primary base station device non-executed (that is to say, it is not executed).

As a configuration example, in the terminal device, when the communication disconnection state is detected by means of the first detection unit, and a plurality of secondary base station devices exist, if at least one of the secondary base station devices among the plurality of secondary base station devices is such that the communication disconnection state is non-detected by the second detection unit, the connection control unit makes reconnection processing with the primary base station device non-executed.

As a configuration example, in the terminal device, at the time the connection control unit executes reconnection processing with the base station devices such that the secondary base station device is newly made the primary base station device, it makes random access processing non-executed (that is to say, it is not executed).

As a configuration example, a terminal device (in the foregoing embodiment, the mobile terminal device 21-1) includes: a wireless communication unit (in the foregoing embodiment, the wireless communication unit 102) that wirelessly communicates with a base station device (in the foregoing embodiment, the macro base station devices 1-1 to 1-2 and the small cell base station devices 2-1 to 2-3); a connection control unit (in the foregoing embodiment, the connection control unit 201) that, by means of the wireless communication unit, connects to a primary base station device (in the foregoing embodiment, the PCell) such that they are able to wirelessly communicate, and connects to a secondary base station device (in the foregoing embodiment, the SCell) such that they are able to wirelessly communicate; and a second detection unit (in the foregoing embodiment, the second detection unit 202) that, based on a predetermined condition, detects a communication disconnection (in the foregoing embodiment, an RLF) state of the wireless communication with the secondary base station device.

As a configuration example, a base station device (the macro base station devices 1-1 to 1-2 and the small cell base station devices 2-1 to 2-3 in the foregoing embodiment) includes: a wireless communication unit (the wireless communication units 122 and 142 in the foregoing embodiment) that wirelessly communicates with a terminal device; and a data control unit (the data control units 301 and 401 in the foregoing embodiment) that, when connected as the secondary base station device such that wireless communication with the terminal device is possible by means of the wireless communication unit, if it is detected by the terminal device, based on a predetermined condition, that the wireless communication with the primary base station device is in a communication disconnection state, and reconnection processing is executed with the terminal device such that its device (its own device) is newly made the primary base station device, receives data (data stored in a buffer for transmission for example) that is untransmitted with respect to the terminal device from the original primary base station device, and transmits the received data to the terminal device by means of the wireless communication unit.

As a configuration example, a communications system (the communications system shown in FIG. 1 in the foregoing embodiment) includes a terminal device and a plurality of base station devices. The terminal device connects to a primary base station device such that wireless communication is possible, and connects to a secondary base station device such that wireless communication is possible. When the terminal device detects a communication disconnection state of the wireless communication with the primary base station device based on a predetermined condition, it executes reconnection processing with the base station devices such that the secondary base station device is newly made the primary base station device.

As a configuration example, a communications method (a communications method performed in the communications system shown in FIG. 1 in the foregoing embodiment) includes: a terminal device connecting to a primary base station device such that they are able to wirelessly communicate, and connecting to a secondary base station device such that they are able to wirelessly communicate; and executing reconnection processing with the base station device when a communication disconnection state in the wireless communication with the primary base station device is detected based on a predetermined condition, such that the secondary base station device is newly made the primary base station device.

As a configuration example, a terminal device includes: a wireless communication unit that performs wireless communication; a connection control unit that connects to a first base station device so as to be able to wirelessly communicate with the first base station device via the wireless communication unit, the first base station device serving as a primary, the connection control unit connecting to a second base station device so as to be able to wirelessly communicate with the second base station device via the wireless communication unit, the second base station device serving as a secondary; and a first detection unit that determines whether a state of wireless communication between the terminal device and the first base station device is in a disconnected state based on a predetermined condition. The connection control unit reconnects between the terminal device and the second base station device such that the second base station device newly serves as a primary base station device when the first detection unit determines that the state of wireless communication is in the disconnected state. As a configuration example, the terminal device further includes: a second detection unit that determines whether a state of wireless communication between the terminal device and the second base station device is in a disconnected state based on a predetermined condition. The connection control unit does not execute reconnection processing with the first base station device when the first detection unit detects that the state of wireless communication between the terminal device and the first base station device is in the disconnected state and the second detection unit detects that the state of wireless communication between the terminal device and the second base station device is not in the disconnected state.

As a configuration example, the terminal device connects to a plurality of base station devices including the second base station device, the plurality of base station devices serving as secondary base station devices. The connection control unit does not execute reconnection processing with the first base station device when the first detection unit determines that the state of wireless communication between the terminal device and the first base station device is in the disconnected state and the second detection unit determines that the state of wireless communication between the terminal device and at least one among the plurality of second base station devices is not in the disconnected state.

As a configuration example, the connection control unit reconnects between the terminal device and the second base station device without performing random access.

As a configuration example, a terminal device includes: a wireless communication unit that performs wireless communication; a connection control unit that connects to a first base station device so as to be able to wirelessly communicate with the first base station device via the wireless communication unit, the first base station device serving as a primary, the connection control unit connecting to a second base station device so as to be able to wirelessly communicate via the wireless communication unit, the second base station device serving as a secondary; a first detection unit that determines whether a state of wireless communication between the terminal device and the first base station device is in a disconnected state based on a predetermined condition; and a second detection unit that determines whether a state of wireless communication between the terminal device and the second base station device is in a disconnected state based on a predetermined condition.

As a configuration example, a base station device includes: a wireless communication unit that wirelessly communicates with a terminal device, the wireless communication unit receiving a signal from the terminal device in a state where the base station device is serving as a secondary base station device and a connection state of wireless communication between the terminal device and another primary base station device being serving as a primary is in a disconnected state, the signal requesting the base station device to newly serves as a primary base station device; and a data control unit that receives data from the other base station device and transmits the data via the wireless communication unit to the terminal device when the wireless communication unit receives the signal, the data being untransmitted to the terminal device by the other base station device.

As a configuration example, a communications system includes: a terminal device; and first and second base station devices. The terminal device connects to the first base station device so as to be able to wirelessly communicate with the first base station device, the first base station device serving as a primary, terminal device connecting to the second base station device so as to be able to wirelessly communicate with the second base station device, the second base station device serving as a secondary. The terminal device determines whether a state of wireless communication between the terminal device and the base station device is in a disconnected state based on a predetermined condition. The terminal device reconnects between the terminal device and the second base station device such that the second base station device newly serves as a primary base station device when the terminal device determines that the state of wireless communication is in the disconnected state.

As a configuration example, a communications method includes: connecting a terminal device and a first base station device such that the terminal device and the first base station device are able to wirelessly communicate with each other, the first base station device serving as a primary, and connecting the terminal device and a second base station device such that the terminal device and the second base station device are able to wirelessly communicate with each other, the second base station device serving as a secondary; determining whether a state of wireless communication between the terminal device and the first base station device is in a disconnected state based on a predetermined condition; and reconnecting between the terminal device and the second base station device such that the second base station device newly serves as a primary base station device when it is determined that the state of wireless communication is in the disconnected state.

### [Summary of Foregoing Embodiment]

The foregoing has described the embodiment of the present invention with reference to the drawings. However the specific configurations are in no way limited to the embodiment. The present invention includes design changes and the like, without departing from the scope of the present invention.

A program for realizing the functions of the devices (the mobile terminal device and the base station devices for example) according to each of the embodiments described above may be recorded on a computer-readable recording medium, and the processing may be performed by making a computer system read the program recorded on the recording medium, and then executing it.

The "computer system" referred to here may include an operating system (OS: Operating System) and hardware such as peripheral devices.

The "computer-readable recording medium" may include a writable non-volatile memory such as a flexible disk, a magnetic optical disk, a ROM (Read Only Memory), a flash memory, and the like, a portable medium such as a DVD (Digital Versatile Disk), or a storage device such as a hard disk built-in to the computer system.

The "computer-readable recording medium" may, in a case where the program is transmitted via a network, such as the Internet, or a communication circuit, such as a telephone line, include those that retain the program for a fixed time, such as a volatile memory (DRAM (Dynamic Random Access Memory) for example) within the computer systems that become the server and the client.

The program mentioned above may be transmitted from a computer system storing the program in a storage device, and the like, to another computer system via a transmission medium or a transmission wave within the transmission medium. Here, the "transmission medium" that transmits the program refers to a medium having a function that transmits information, including a network (communication network) such as the Internet, and a communication circuit (communication line), such as a telephone line.

The program described above may be one that realizes a portion of the functions mentioned above.

The program described above may be one that realizes the functions mentioned above by being combined with a program that has previously been stored in the computer system, as a so-called difference file (difference program).

### INDUSTRIAL APPLICABILITY

The present invention may be applied to terminal devices, base station devices, communications systems, and communications methods.

### Reference Symbols

1, 1-1 to 1-2, 1001-1 Macro base station device
2, 2-1 to 2-3, 1002-1 Small cell base station device
11-1 to 11-2, 12-1 to 12-3, 1011-1, 1012-1 Cell (communication region)
21, 21-1, 1021-1 Mobile terminal device
101, 121, 141 Antenna
102, 122, 142 Wireless communication unit
103 Input unit
104 Output unit
105, 124, 144 Storage unit
106, 125, 145 Control unit
123, 143 Communication unit
201 Connection control unit
202 Secondary base station disconnection detection unit (second detection unit)
203 Primary base station disconnection detection unit (first detection unit)
301, 401 Untransmitted data control unit (data control unit)
501 SCell

## Claims

1. A terminal device comprising:
a wireless communication unit that performs wireless communication;
a connection control unit that connects to a first base station device so as to be able to wirelessly communicate with the first base station device via the wireless communication unit, the first base station device serving as a primary, the connection control unit connecting to a second base station device so as to be able to wirelessly communicate with the second base station device via the wireless communication unit, the second base station device serving as a secondary; and
a first detection unit that determines whether a state of wireless communication between the terminal device and the first base station device is in a disconnected state based on a predetermined condition,
wherein the connection control unit reconnects between the terminal device and the second base station device such that the second base station device newly serves as a primary base station device when the first detection unit determines that the state of wireless communication is in the disconnected state.

2. The terminal device according to claim 1, further comprising:
a second detection unit that determines whether a state of wireless communication between the terminal device and the second base station device is in a disconnected state based on a predetermined condition,
wherein the connection control unit does not execute reconnection processing with the first base station device when the first detection unit detects that the state of wireless communication between the terminal device and the first base station device is in the disconnected state and the second detection unit detects that the state of wireless communication between the terminal device and the second base station device is not in the disconnected state.

3. The terminal device according to claim 2, wherein
the terminal device connects to a plurality of base station devices including the second base station device, the plurality of base station devices serving as secondary base station devices, and
the connection control unit does not execute reconnection processing with the first base station device when the first detection unit determines that the state of wireless communication between the terminal device and the first base station device is in the disconnected state and the second detection unit determines that the state of wireless communication between the terminal device and at least one among the plurality of second base station devices is not in the disconnected state.

4. The terminal device according to any one of claims 1 to 3, wherein the connection control unit reconnects between the terminal device and the second base station device without performing random access.

5. A terminal device comprising:
a wireless communication unit that performs wireless communication;
a connection control unit that connects to a first base station device so as to be able to wirelessly communicate with the first base station device via the wireless communication unit, the first base station device serving as a primary, the connection control unit connecting to a second base station device so as to be able to wirelessly communicate via the wireless communication unit, the second base station device serving as a secondary;
a first detection unit that determines whether a state of wireless communication between the terminal device and the first base station device is in a disconnected state based on a predetermined condition; and
a second detection unit that determines whether a state of wireless communication between the terminal device and the second base station device is in a disconnected state based on a predetermined condition.

6. A base station device comprising:
a wireless communication unit that wirelessly communicates with a terminal device, the wireless communication unit receiving a signal from the terminal device in a state where the base station device is serving as a secondary base station device and a connection state of wireless communication between the terminal device and another primary base station device being serving as a primary is in a disconnected state, the signal requesting the base station device to newly serves as a primary base station device; and
a data control unit that receives data from the other base station device and transmits the data via the wireless communication unit to the terminal device when the wireless communication unit receives the signal, the data being untransmitted to the terminal device by the other base station device.

7. A communications system comprising: a terminal device; and first and second base station devices, wherein
the terminal device connects to the first base station device so as to be able to wirelessly communicate with the first base station device, the first base station device serving as a primary, terminal device connecting to the second base station device so as to be able to wirelessly communicate with the second base station device, the second base station device serving as a secondary,
the terminal device determines whether a state of wireless communication between the terminal device and the base station device is in a disconnected state based on a predetermined condition, and
the terminal device reconnects between the terminal device and the second base station device such that the second base station device newly serves as a primary base station device when the terminal device determines that the state of wireless communication is in the disconnected state.

8. A communications method comprising:
connecting a terminal device and a first base station device such that the terminal device and the first base station device are able to wirelessly communicate with each other, the first base station device serving as a primary, and connecting the terminal device and a second base station device such that the terminal device and the second base station device are able to wirelessly communicate with each other, the second base station device serving as a secondary;
determining whether a state of wireless communication between the terminal device and the first base station device is in a disconnected state based on a predetermined condition; and
reconnecting between the terminal device and the second base station device such that the second base station device newly serves as a primary base station device when it is determined that the state of wireless communication is in the disconnected state.
